# EUROPEAN PATENT APPLICATION

(11) **EP 2 717 626 A2**
(43) Date of publication of application: **09.04.2014**
(21) Application number: 13020111.4
(22) Date of filing: 02.10.2013
(51) Int. Cl.: H04W 36/12

(54) **Local gateway reselection**

(30) Priority: 02.10.2012 US 201261709123 P
(71) Applicant: HTC Corporation, Taoyuan County 330 (TW)
(72) Inventor: Lai, Hsien-Hao, 330 Taoyuan City (TW)
(74) Representative: Schmidbauer, Andreas Konrad

(57) **Abstract**

A method of local gateway reselection, for a local gateway in a wireless communication system is disclosed. The method comprises informing a core network of the wireless communication to trigger a local gateway reselection, when at least one of parameters associated with the local gateway changes, wherein the parameters include an access point name request by a user equipment of the wireless communication system, a local gateway address, a local gateway load balancing, and local gateway failure case.

## Description

### Background of the Invention

### 1. Field of the Invention

The present invention relates to a method used in a communication device in wireless communication system, and more particularly, to a method of local gateway reselection.

### 2. Description of the Prior Art

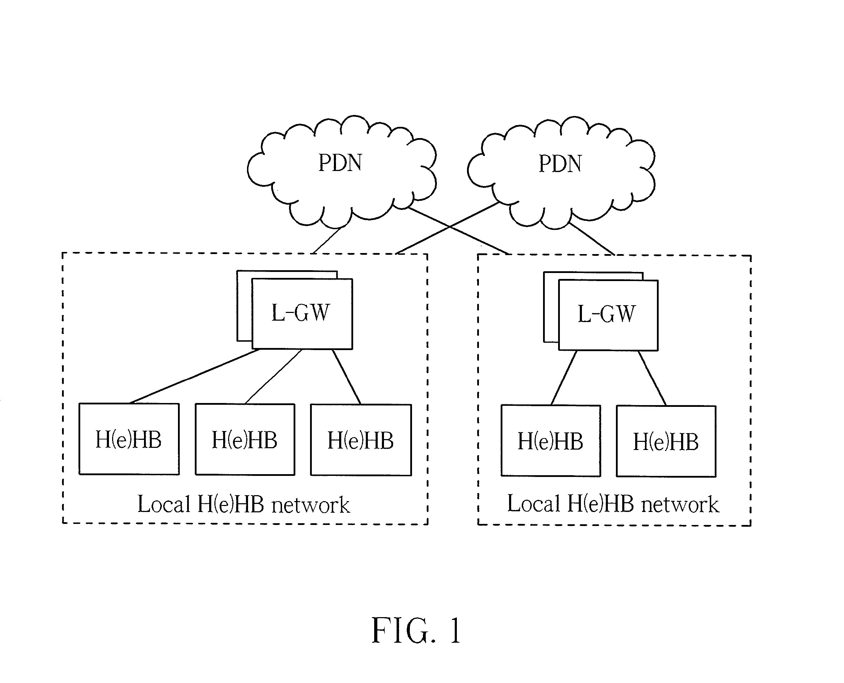

Based on the 3GPP specification TR 23. 859, local IP access (LIPA) mobility allows the user equipment to maintain session continuity for LIPA PDN connection (s) to one or several local PDN(s) when moving between H(e)NBs of the local H(e)NB network (LHN). Please refer to Fig. 1, which is a schematic diagram of architecture for LIPAmobility. A LHN is defined by a set of H(e)NBs having IP connectivity for LIPA to local PDN(s) via one or several local gateways (L-GWs), whereby a H(e)NB only belongs to a single LHN, an L-GW only belongs to a single LHN, an L-GW can access one or several PDNs, and one PDN can be accessed via multiple LHNs.

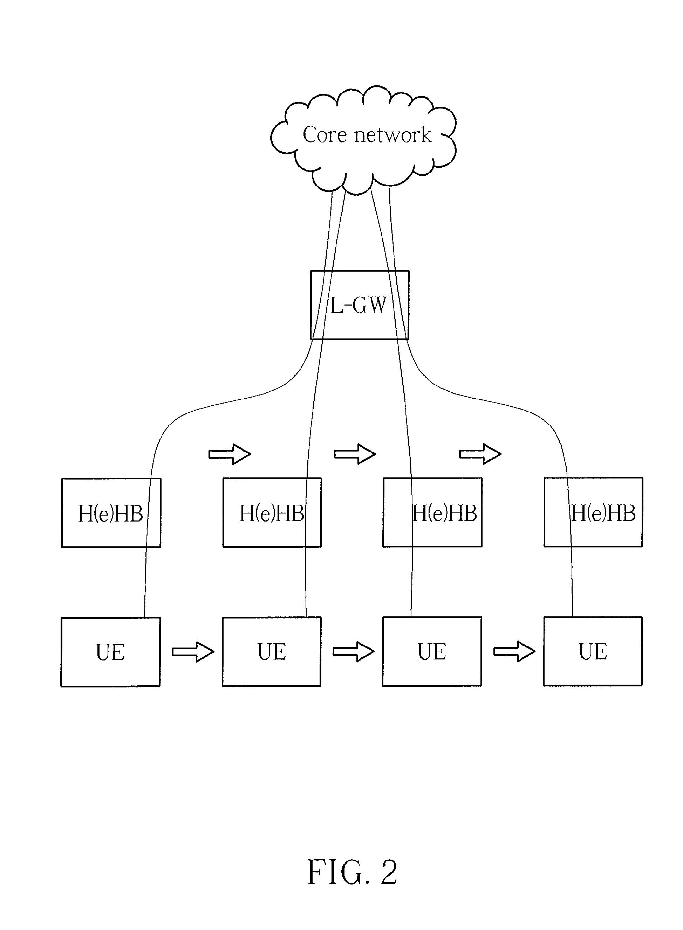

Please refer to Fig. 2, which is a schematic diagram of LIPA mobility with stand-alone L-GW. When a UE requests a LIPA bearer, a PDN connection is established and terminates in the L-GW, where it is assigned an IP address (belonging to the local IP network). As the UE moves around between the H(e)NBs in the local network, it needs to maintain its connectivity to the L-GW in order to keep its IP address and the ongoing services. The L-GW is thus the obvious anchor point of the LIPA connectivity to the local IP network.

As to the L-GW addressing, in 3GPP Rel-10 LIPA architecture, the L-GW is collocated with H(e)NB, and therefore, the L-GW address and H(e)NB address do not need to be signaled between them. However, in 3GPP Rel-11, when the standalone L-GW is supported, L-GW and H(e)NB must exchange their addresses in order to establish the direct data path between them. Considering the involvement of Security Gateway (SeGW), there would be two addresses each for the L-GW and H(e)NB, i.e. the local network address from the home network, and the core network address allocated by SeGW.

The L-GW selection is performed by the core network (i.e. MME/SGSN), and the L-GW selection should be able to take into account associated parameters, such as the APN requested by the UE, the LHN ID, L-GW load balancing, L-GW failure cases, etc. According to the architecture principles, an L-GW in a given LHN cannot serve a H(e)NB in another LHN. Hence, the H(e)NB needs to provide the core network with a LHN ID in order to prevent the selection of an L-GW outside the LHN.

After the core network selects an L-GW, the core network signals the local network address of the L-GW to the H(e)NB, and the H(e)NB uses the L-GW information received from the Core Network entity for the initial setup of direct path between the H(e)NB and the L-GW. The H(e)NB local network address has to be signaled to the L-GW such that the downlink direction of the direct data path can be setup accordingly.

However, after the direct path between the H(e)NB and the L-GW is setup, the H(e)NB may not receive any information from Core Network when the parameters of L-GW, such as supported APNs or L-GW address, have changed, or when the L-GW has failed. Without updating these parameters, the connection between H(e)NB and L-GW may fail. Therefore, there is a need to solve the above problems.

### Summary of the Invention

It is there for an objective to provide a method of local gateway reselection to solve the above problems.

The present invention discloses a method of local gateway reselection, for a local gateway in a wireless communication system. The method comprises informing a core network of the wireless communication to trigger a local gateway reselection, when at least one of parameters associated with the local gateway changes, wherein the parameters include an access point name request by a user equipment of the wireless communication system, a local gateway address, a local gateway load balancing, and local gateway failure case.

The present invention discloses a method of local gateway reselection, for a core network in a wireless communication system. The method comprises receiving a first message informing the core network to trigger a local gateway reselection, from a local gateway of the wireless communication system, and sending a second message for deactivating a local IP access (LIPA) connection of a user equipment of the wireless communication system, to the user equipment.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of architecture for LIPAmobility.

Fig. 2 is a schematic diagram of LIPA mobility with stand-alone L-GW.

Fig. 3 is a schematic diagram of a communication device.

Figs. 4-5 are flowcharts of processes according to examples of the present disclosure.

### Detailed Description

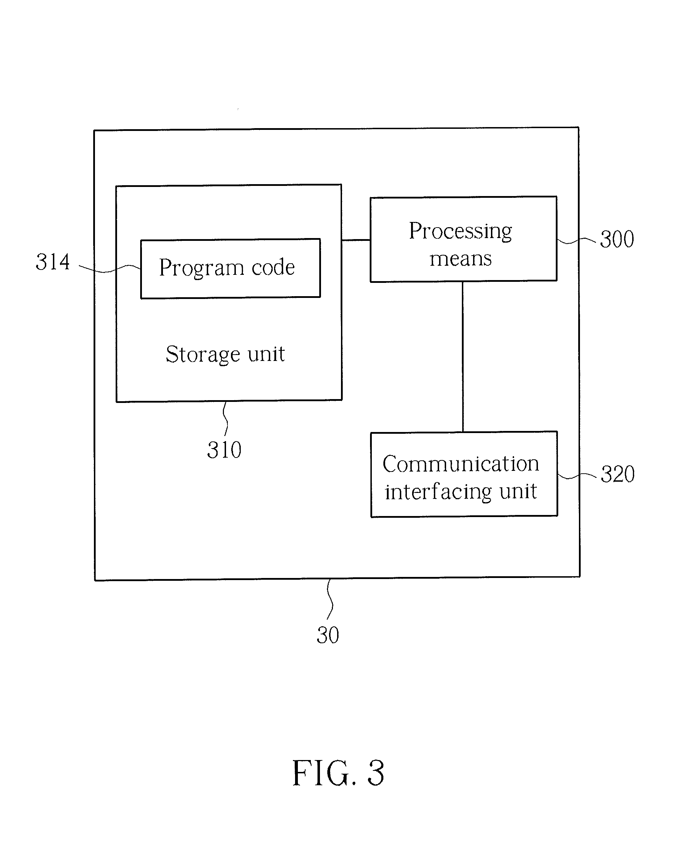

Please refer to Fig. 3, which is a schematic diagram of a communication device 30 according to an example of the present disclosure. The communication device 30 may be a local gateway, core network, or a user equipment (UE) shown in Fig. 1 or Fig. 2. The communication device 30 may include a processing means 300 such as a microprocessor or Application Specific Integrated Circuit (ASIC), a storage unit 310 and a communication interfacing unit 320. The storage unit 310 may be any data storage device that can store a program code 314, accessed by the processing means 300. Examples of the storage unit 310 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 320 is preferably a transceiver and can exchange signals with a H(e)NB or core network (i.e. SGSN/MME) according to processing results of the processing means 300.

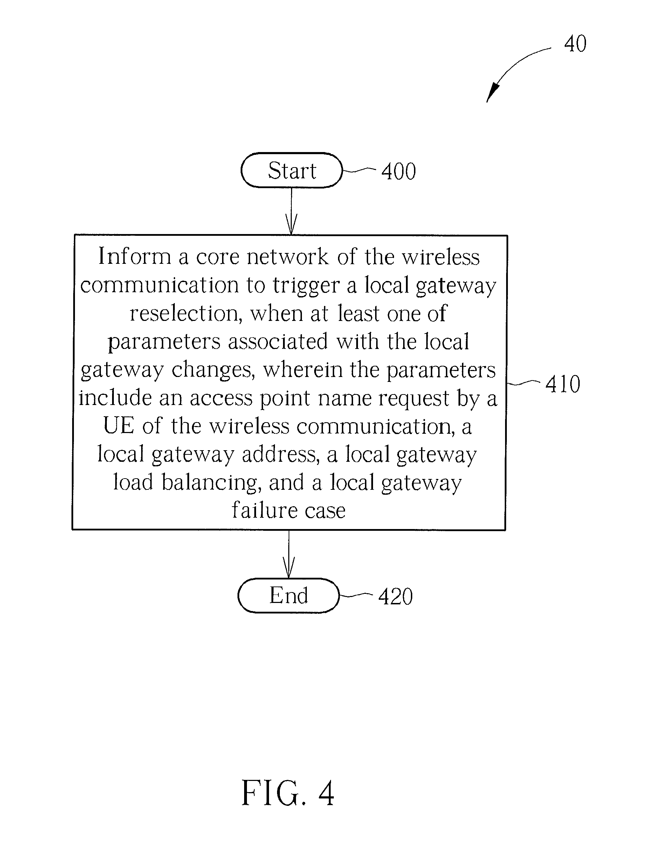

Please refer to Fig. 4, which is a flowchart of a process 40 according to an example of the present disclosure. The process 40 is utilized in the communication device 30 (i.e. a local gateway) for local gateway reselection. The process 40 may be compiled into a program code 314 to be stored in the storage unit 310, and may include the following steps:

Step 400: Start.

Step 410: Inform a core network of the wireless communication to trigger a local gateway reselection, when at least one of parameters associated with the local gateway changes, wherein the parameters include an access point name request by a UE of the wireless communication, a local gateway address, a local gateway load balancing, and a local gateway failure case.

Step 420: End.

According to the process 40, when at least a parameter associated to a local gateway, such as an access point name (APN) request by a UE, a local gateway address, a local gateway load balancing, and a local gateway failure case, changes, the local gateway informs the core network to trigger a local gateway reselection, so that a H(e)NB is able to establish a new direct path with the newly selected local gateway, to avoid local IP access (LIPA) connection failure.

In an embodiment, a local gateway may update at least a parameter such as the supported APNs, L-GW address, L-GW load balancing or L-GW failure cases when the at least parameter mentioned above are changed. Meanwhile, the local gateway transmits a first message to inform the core network to reselect a new local gateway. The first message transmitted to the core network may include at least one of a local gateway name, a local gateway address, a local H(e)NB network ID, H(e)NB name (s) and the H(e)NB address (es) associated with the local gateway, so that the core network can perform local gateway reselection according to the updated parameters. Note that, those parameters included in the first message may be not directly transmitted to the core network, but first transmitted to a H(e)NB and then the H(e)NB transmits another message including those parameters to the core network.

After the core network receives the first message (or another message)including parameters as least one of a local gateway name, a local gateway address, a local H(e)NB network ID, H(e)NB name(s) and the H(e)NB address(es) associated with the local gateway, the core network (e.g. MME, Serving GW or P-GW) triggers the SGSN/MME to deactivate a current LIPA PDN connection of a UE which has a LIPA connection toward the local gateway by sending a second message, e.g. a detach request message with a re-attach cause, a DEACTIVATE EPS BEARER CONTEXT REQUEST message, or a deactivate PDP context request message, to the UE. Once the UE receives the second message, the UE re-establishes a new LIPA connection. In the new LIPA connection setup, a new local gateway is selected by the core network for the new LIPA connection, and the local gateway address or the local gateway name is transmitted form the core network to the H(e)NB. Then, the H(e)NB establishes the new direct path with the selected local gateway.

Through the process 40, the updated L-GW associated parameters are able to be known to the core network, the current LIPA connection of the UE stops in a regular way, and thus a new LIPA connection will be established with a newly selected L-GW. Therefore, LIPA connection failure is avoided.

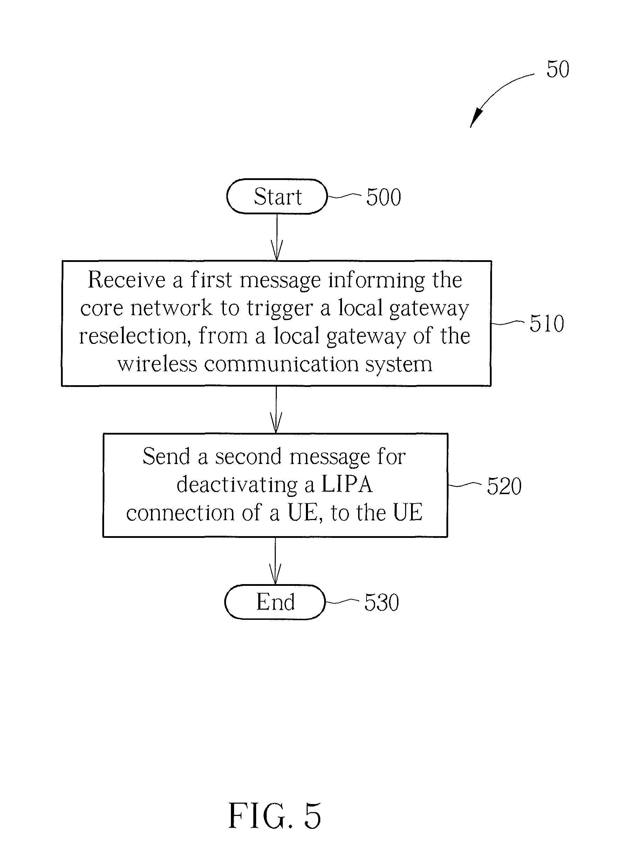

Please refer to Fig. 5, which is a flowchart of a process 50 according to an example of the present disclosure. The process 50 is utilized in the communication device 30 (i.e. a core network) for local gateway reselection. The process 50 may be compiled into a program code 314 to be stored in the storage unit 310, and may include the following steps:

Step 500: Start.

Step 510: Receive a first message informing the core network to trigger a local gateway reselection, from a local gateway of the wireless communication system.

Step 520: Send a second message for deactivating a LIPA connection of a UE, to the UE.

Step 530: End.

According to the process 50, after the core network receives a first message from the local gateway and the first message is utilized for informing the core network to trigger the local gateway reselection due to abovementioned parameters (i.e. the supported APNs, local gateway address, local gateway load balancing or local gateway failure cases) associated with the local gateway changes, the core network sends a second message to a UE to deactivate the LIPA connection of the UE. When the UE receives the second message from the core network, the UE is able to re-establish a new LIPA connection with a new local gateway reselected by the core network during the new LIPA connection re-establishment.

Note that, the first message includes at least one of a local gateway name, a local gateway address, a local H(e)NB network ID, the H(e)NB name(s) and the H(e)NB address(es) associated with the local gateway. The second message may be a detach request message, a DEACTIVATE EPS BEARER CONTEXT REQUEST message or a deactivate PDP context request message.

The abovementioned steps of the processes including suggested steps can be realized by means that could be a hardware, a firmware known as a combination of a hardware device and computer instructions and data that reside as read-only software on the hardware device or an electronic system. Examples of hardware can include analog, digital and mixed circuits known as microcircuit, microchip, or silicon chip. Examples of the electronic system can include a system on chip (SOC), system in package (SiP), a computer on module (COM) and the communication device 30.

In conclusion, a method of local gateway reselection is provided. The local gateway automatically informs the core network to trigger the local gateway reselection, so as to avoid LIPA connection failure due to the supported APNs, local gateway address or local gateway load balancing change or local gateway failure case.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of local gateway reselection, for a local gateway (30) in a wireless communication system, comprising:
informing (410) a core network of the wireless communication to trigger a local gateway reselection, when at least one of parameters associated with the local gateway changes, wherein the parameters include an access point name request by a user equipment of the wireless communication system, a local gateway address, a local gateway load balancing, and local gateway failure case.

2. The method of claim 1, wherein the step of informing the core network of the wireless communication to trigger the local gateway reselection comprises:
transmitting a first message to inform the core network to reselect a new local gateway, wherein the first message includes at least one of a local gateway name, a local gateway address, a local H(e)NB network name, and a H(e)NB address.

3. The method of claim 1, wherein the step of informing the core network of the wireless communication to trigger the local gateway reselection comprises:
transmitting a second message to a H(e)NB of the wireless communication system, whereby the H(e)NB transmits the second message to the core network, wherein the second message includes at least one of a local gateway name, a local gateway address, a local H(e)NB network name, and a H(e)NB address.

4. A method of local gateway reselection, for a core network (30) in a wireless communication system, comprising:
receiving (510) a first message informing the core network to trigger a local gateway reselection, from a local gateway of the wireless communication system; and
sending (520) a second message for deactivating a local IP access, LIPA, connection of a user equipment of the wireless communication system, to the user equipment.

5. The method of claim 4, wherein the step of receiving the first message informing the core network to trigger the local gateway reselection from the local gateway of the wireless communication system comprises:
receiving the first message including at least one of a local gateway name, a local gateway address, a local H(e)NB network name, and a H(e)NB address.

6. The method of claim 4, wherein the step of sending the second message for deactivating the LIPA connection of the user equipment of the wireless communication system, to the user equipment comprises:
sending a detach request message, a DEACTIVATE EPS BEARER CONTEXT REQUEST message or a deactivate PDP context request message to the user equipment.
